(19) Europäisches Patentamt
European Patent Office
Office européen des brevets

(11) Veröffentlichungsnummer: **0 275 451 B1**

# (12) EUROPÄISCHE PATENTSCHRIFT

(45) Veröffentlichungstag der Patentschrift: **06.06.90**

(51) Int. Cl.$^5$: **C08C 19/30**, C08F 8/00, B01F 17/00

(21) Anmeldenummer: **87118113.7**

(22) Anmeldetag: **08.12.87**

(54) **Polymere Emulgatoren auf Basis aminotelecheler Oligomere I.**

(30) Priorität: **20.12.86 DE 3643792**

(43) Veröffentlichungstag der Anmeldung: **27.07.88 Patentblatt 88/30**

(45) Bekanntmachung des Hinweises auf die Patenterteilung: **06.06.90 Patentblatt 90/23**

(84) Benannte Vertragsstaaten: **DE FR GB IT**

(56) Entgegenhaltungen:
**DE-A- 2 151 848**
**FR-A- 1 495 086**
**US-A- 2 647 146**
**US-A- 3 853 815**

(73) Patentinhaber: **BAYER AG, D-5090 Leverkusen 1 Bayerwerk(DE)**

(72) Erfinder: **Schmidt, Adolf, Dr., Roggendorfstrasse 67, D-5000 Köln 80(DE)**
Erfinder: **Hendricks, Udo, Dr., Am Höhenfeld 12, D-5068 Odenthal(DE)**
Erfinder: **Bömer, Bruno, Dr., Max-Planck-Strasse 53, D-5060 Bergisch-Gladbach 2(DE)**
Erfinder: **Ott, Karl-Heinz, Dr., Paul-Klee-Strasse 54, D-5090 Leverkusen 1(DE)**
Erfinder: **Eichenauer, Herbert, Dr., Goethestrasse 71, D-4047 Dormagen 1(DE)**
Erfinder: **Pischtschan, Alfred, Dr., Zur Eiche 33, D-5067 Kürten(DE)**

**EP 0 275 451 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Gegenstand der Erfindung ist die Verwendung Polycarbonsäuren und ihren Salzen der allgemeinen Formel

[X]-(NHOC-Y-COO M)$_n$(I),

in der
X für den Rest eines hydrophoben, gegebenenfalls verzweigten Vinyloligomers mit einem mittleren Molekulargewicht $\overline{M}_n$ von 200 - 5000, vorzugsweise 300 - 3000,
Y für den 1,2-Vinylen-, 1,2-Ethylen-, 1,3-Propylen-, 1,2-Phenylen-, 1,2-Cyclohexen-4-ylen- oder 1,2-Cyclohexylen-Rest,
n für eine Zahl von 1,4 - 3,0, vorzugsweise 1,6 - 2,3
M für Wasserstoff, ein Alkalimetall, eine Ammonium-, $C_1$-$C_4$-Alkylammonium- oder $C_2$-$C_3$-Hydroxyalkylammonium-Gruppe stehen, als Tenside und Emulgatoren in wäßrigen Systemen.

Beispiele für die X zugrunde liegenden Vinyloligomere sind: Oligobutadiene und Oligoisoprene sowie die entsprechenden Produkte mit teilweise oder vollständig hydrierten Doppelbindungen, Oligomere aus Ethylen, Propen, Styrol, Vinylestern mit 2 - 4 C-Atomen im Carbonsäureteil, (cyclo)-aliphatische Ester der (Meth) acrylsäure mit 1 - 12 C-Atomen im Alkoholrest, Triethoxyvinylsilan odr Trimethylvinylsilan.

Beispiel für M sind Natrium, Kalium, Ammonium, Mono-, Di- oder Trimethylammonium, Mono- Di- oder Tri- (hydroxyethyl)-ammonium und Mono- oder Di-(hydroxypropyl)-ammonium.

Ein weiterer Gegenstand der Erfindung ist die Verwendung der polymeren Emulgatoren zur Herstellung von Emulsionspolymerisaten, insbesondere von Pfropfgrundlagen für verbesserte schlagzähe Thermoplaste.

Die Verbindungen der Formel I sind aus US-A 3 853 815 und FR-A 1 495 086 bekannt und werden nach an sich bekannten Verfahren hergestellt, indem man endständige Aminogruppen enthaltende Vinyloligomere der Formel

[X]-(-NH$_2$)$_n$(II),

in der
X und n die obengenannte Bedeutung haben, mit Dicarvonsäureanhydriden der Formel

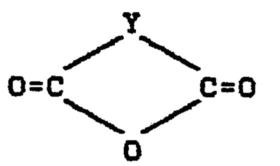
(III),

in der Y die obengenannte Bedeutung besitzt, bei Temperaturen von 20°C - 120°C, vorzugsweise von 40° -70°C, und gegebenenfalls in Anwesenheit inerter Lösungsmittel im Molverhältnis von mindestens 1:n umsetzt und gegebenenfalls anschließend die erhaltenen Reaktionsprodukte mit Alkalihydroxiden, Ammoniak, $C_1$-$C_4$-Alkylaminen oder $C_2$-$C_3$-Hydroxyalkylaminen neutralisiert.

Die endständige Aminogruppen enthaltenden Vinyloligomere der Formel II, die im folgenden als aminotelechele Vinyloligomere bezeichnet werden sollen, sind bekannt,

Geeignete aminotelechele Oligomere sind beispielsweise die in der DE-OS 2 151 848 beschriebenen Produkte, soweit sie in Wasser unlöslich sind, ferner aminotelechele Oligopropylene, Oligobutadiene, Oligoisoprene sowie aminotelechele Oligobutadiene und Oligoisoprene, deren Doppelbindungen teilweise oder vollständig hydriert wurden.

Die Herstellung solcher aminotelecheler Vinyloligomere ist bekannt. Sie erfolgt durch Polymerisation von Vinylmonomeren unter Verwendung großer Mengen nitrilhaltiger aliphatischer Azoinitiatoren, wobei Vinyloligomere mit endständigen Nitrilgruppen entstehen, die durch katalytische Hydrierung der Nitrilendgruppen zu primären Aminogruppen in die aminotelechelen Vinyloligomere der Formel II überführt werden.

Beispielsweise beschreibt die US-Patentschrift 2 561 068 u.a. die Herstellung von Polybutadienen, Polyisoprenen und Polypropylenen mit niedrigem Molekulargewicht und ungefähr zwei Nitrilendgruppen durch diskontinuierliche Polymerisation der entsprechenden Monomere unter Verwendung großer Mengen nitrilhaltiger aliphatischer Azoinitiatoren.

Die katalytische Hydrierung der Nitrilendgruppen solcher Produkte zu primären Aminoendgruppen ist in US-Patent 2 647 146 beschrieben. Auf der wachsartigen Konsistenz des im Beispiel 2 dieses Patentes hergestellten Diamins kann auf eine zumindest teilweise Hydrierung der Doppelbindungen des Oligobutadiens geschlossen werden.

Die Herstellung der nitriltelechelen Oligobutadiene oder Oligoisoprene erfolgt vorzugsweise kontinuierlich in einem gefluteten Rührautoklaven bei Drucken unter 25 bar. Das Molekulargewicht der Oligomeren kann über das Verhältnis Azodinitril-Initiator zu Monomer eingestellt werden. Als Azodinitrilinitiatoren können beispielsweise eingesetzt werden: 2,2'-Azo-bis-isobutyronitril (AIBN), 2,2'-Azo-bis-2-methylbutyronitril, 1,1'-Azo-dicyclopentan-carbonitril, 1,1'-Azodicyclohexancarbonitril, 2,2'-Azo-bis-cyclopentylpropionitril, 1,1'-Azo-dicamphercarbonitril, 2,2'-Azo-bis-(α, γ-dimethylvaleronitril), 2,2'-Azo-bis-2-phenylpropionitril, 2,2'-Azobis-2-benzyl-propionitril und 2,2'-Azo-bis-2-(4-methoxyphenyl)propionitril.

Bevorzugte Initiatoren sind AIBN, 2,2'-Azo-bis-methylbutyronitril und 2,2'-Azo-bis-(α,γ-dimethylvaleronitril).

Bei Verwendung von AIBN als Initiator liegen die bevorzugten Polymerisationstemperaturen bei 90°-130°C und die mittleren Verweilzeiten bei 1 - 6 Stunden.

Selbstverständlich können geeignete nitriltelechele Oligobutadiene und Oligoisoprene auch diskontinuierlich nach einem Zulaufverfahren hergestellt werden. Die Hydrierung der Nitrilendgruppen erfolgt in an sich bekannter Weise durch katalytische Hydrierung des in einem Lösungsmittel wie z.B. Toluol gelösten Oligomeren. Zur selektiven Hydrierung der Nitrilgruppen ist beispielsweise Raney-Cobalt geeignet, wobei durch einen Zusatz von $NH_3$ die Bildung von sekundären und tertiären Aminogruppen zurückgedrängt werden kann.
Der $H_2$-Druck beträgt vorzugsweise 100 - 200 bar und die Hydriertemperatur 100° - 200°C. Bei sehr langen Hydrierzeiten oder bei Zusatz von Raney-Nickel zum Raney-Cobalt gelingt auch die Hydrierung der C-C-Doppelbindungen der Oligobutadiene bzw. Oligoisoprene.

Die Herstellung aminotelecheler Oligostyrole, aminotelecheler Oligoethylene, aminotelecheler Oligoacrylsäureethylester, eines aminotelechelen Oligomethacrylsäuremethylesters, eines aminotelechelen Oligovinylacetats ist in den Beispielen der DE-OS 2 151 848 beschrieben. Die Herstellung der nitriltelechelen Vorprodukte erfolgt dabei nach den Verfahren der DE-OS 2 030 589. Außerdem wurde die Herstellung von dinitriltelechelen Oligostyrolen ausführlich von Konter, Bömer, Köhler und Heitz in Makromol, Chem. 182 (1981) 2619 - 2632 beschrieben. Geeignete Dicarbonsäureanhydride der Formel III sind beispielsweise Bernsteinsäure-, Glutarsäure-, Maleinsäure- und Phthalsäureanhydrid sowie Tetra- und Hexahydrophthalsäureanhydrid.

Geeignete Lösungsmittel für die Umsetzung der aminotelechelen Vinyloligomere der Formel II mit den Dicarbonsäureanhydriden der Formel III sind beispielsweise aliphatische oder aromatische Kohlenwasserstoffe, insbesondere Toluol und Xylol, aliphatische oder aromatische Halogenkohlenwasserstoffe, wie Methylenchlorid, Ethylenchlorid oder Chlorbenzol, Ester oder Ketone, wie z.B. Ethylacetat oder Aceton.

Vorzugsweise werden die aminotelechelen Vinyloligomere in dem Lösungsmittel gelöst und die Dicarbonsäureanhydride diesen Lösungen bei der gewählten Reaktionstemperatur zugesetzt. Das Mengenverhältnis der Komponenten wird so gewählt, daß auf jedes Aminäquivalent der aminotelechelen Vinyloligomere mindestens ein Äquivalent der Dicarbonsäureanhydride entfällt, gegebenenfalls können die Dicarbonsäureanhydride in geringem Überschuß eingesetzt werden.

Anschließend werden die Reaktionsprodukte, gegebenenfalls nach Entfernen der Lösungsmittel durch Destillation, durch Zugabe von Alkalihydroxiden, Ammoniak, $C_1$-$C_4$-Alkylaminen oder $C_2$-$C_3$-Hydroxyalkylaminen, vorzugsweise in Form wäßriger oder alkoholischer Lösungen, neutralisiert.

Die polymeren Emulgatoren werden in Mengen von 0,2 bis 20 Gew.-%, vorzugsweise 1 bis 10 Gew.-%, bezogen auf die Monomermenge eingesetzt.

Sie eignen sich beispielsweise für die Emulsionspolymerisation von Butadien, Isopren, Chloropren, Styrol und im aromatischen Kern substituierten Styrolen, α-Methylstyrol, (Meth)acrylsäureestern mit 1 - 20 C-Atomen im Alkoholrest, Vinylestern mit 2 - 10 C-Atomen im Carbonsäurerest, Ethylen, Vinylchlorid, Vinylidenchlorid, Acrylnitril und Methacrylnitril sowie für die Emulsionscopolymerisation geeigneter Kombinationen der vorgenannten Monomeren. Zur zusätzlichen Stabilisierung der Emulsionen können ferner untergeordnete Mengen (ca. 0,1 bis 10 Gew.-%) von (Meth)acrylsäure, (Meth)acrylamid, Maleinsäure, Itaconsäure, Vinylsulfonsäure, Methallylsulfonsäure, Vinylphosphonsäure oder Acrylamido-2-methylpropansulfonsäure (AMPS) eingebaut werden. Vorzugsweise werden die erfindungsgemäßen polymeren Emulgatoren eingesetzt zur Polymerisation von Butadien, Isopren und Chloropren, sowie zur Copolymerisation von Butadien-Styrol, Butadien-Acrylnitril, Ethylen-Vinylacetat, Ethylen-Vinylchlorid, Styrol, Butylacrylat und Styrol-Acrylnitril.

Zur Herstellung von Polybutadienlatices, die als Pfropfgrundlagen für die Herstellung schlagfester Thermoplaste von ABS-Typ besonders geeignet sind, werden solche polymeren Emulgatoren (besonders) bevorzugt eingesetzt, deren Rest X aus Polybutadien, Polyisopren bzw. Polyisopren oder Polybutadien, dessen Doppelbindungen teilweise oder vollständig hydriert sind, bestehen.

<u>Herstellungsbeispiele 1 - 4</u>

Polymerisate von Butadien bzw. Isopren mit Nitrilendgruppen

Ein 6 1-Rührautoklav mit Druckhalteventil wird mit Toluol vollständig gefüllt und auf 120°C Innentemperatur erwärmt. Bei dieser Temperatur werden stündlich die in der Tabelle angegeben Mengen flüssiges

Butadien bzw. Isopren sowie eine Toluollösung, die 40 g Azoisobuttersäurenitril (AIBN) pro Liter enthält, zugepumpt.

Das Druckhalteventil wird auf 16 - 18 bar eingestellt. Nach einer Anfahrphase von 8 Stunden wird die aus dem Autoklaven austrentende Lösung vom Restmonomer befreit und im Vakuum eingedampft.

| Herstellungsbeispiel Nr. | 1 | 2 | 3 | 4 |
|---|---|---|---|---|
| Butadien [ml/h] | 750 | 1500 | – | – |
| Isopren [ml/h] | – | – | 750 | 1500 |
| AIBN-Lösung [ml/h] | 2250 | 1500 | 2250 | 1500 |
| Ausbeute [g/h] | 360 | 580 | 385 | 630 |
| Stickstoffgehalt [%] | 4,0 | 1,6 | 3,9 | 1,6 |
| $M_n$ aus N | 700 | 1750 | 720 | 1750 |
| $M_n$ aus Dampfdruckosmose | 730 | 1680 | 750 | 1790 |

Herstellungsbeispiele 5 - 8

Herstellung der aminotelechelen Oligomere durch Hydrierung der Nitrilendgruppen

In einem 4 l-Autoklaven werden jeweils 750 g dinitriltelecheles Oligomer, 2 l Toluol, 375 ml flüssiges Ammoniak und 75 g Raney-Cobalt, vorgelegt und bei 200°C und 100 bar Wasserstoffdruck 10 Stunden hydriert.

Nach dem Abfiltrieren des Katalysators wird das Toluol im Vakuum entfernt.

| Herstellungsbeispiel Nr. | 5 | 6 | 7 | 8 |
|---|---|---|---|---|
| Oligobutadien aus Beispiel Nr. | 1 | 2 | – | – |
| Oligoio spren aus Beispiel Nr. | – | – | 3 | 4 |
| Ausbeute [g] | 740 | 730 | 755 | 725 |
| Gesamtstickstoff [%] | 3,9 | 1,5 | 3,7 | 1,55 |
| Basenstickstoff [%] | 3,2 | 1,49 | 3,5 | 1,55 |
| primärer Stickstoff [%] | 2,9 | 1,45 | 3,3 | 1,45 |
| sekundärer Stickstoff [%] | 0,2 | 0,03 | 0,15 | 0,08 |
| tertiärer Stickstoff [%] | 0,1 | 0,01 | 0,05 | 0,02 |
| $M_n$ aus N gesamt | 740 | 1870 | 760 | 1800 |

Beispiele 9–15 erläutern die Herstellung der Polycarbonsäuren, die erfindungsgemäß zu verweden sind.

Beipiel 9

120 Tle. eines aminotelechelen Oligobutadiens, hergestellt nach Herstellungsbeispiel 5 (Basen-Stickstoff 3,2%, $\overline{M_n}$ 740) wurden in 50 Tln. Toluol gelöst und bei 50° - 60°C portionsweise mit 29 Tln. Maleinsäureanhydrid versetzt und bei 60° - 70°C eine Stunde gerührt. nach dem Abdestillieren des Toluols unter Vakuum erhielt man 148 Tle. eines viskosen, dunkelbraunen Rückstands, der eine Säurezahl von 114 mg KOH/g besaß. Das IR-Spektrum zeigte das Vorliegen einer Säureamidgruppe.

Der Rückstand wurde mit 120 Tln. Ethanol gelöst und bei 40° - 50°C mit 60 Tln. einer 20%igen Natronlauge neutralisiert. Ethanol und Wasser wurden im Vakuum weitgehend abdestilliert und der Rückstand in Wasser unter Zusatz von 10 Tln. Natriumchlorid gelöst. Man erhielt eine viskose, klare Lösung des Natriumsalzes mit einem Feststofgehalt von 44%.

Beispiel 10

120 Tle. eines aminotelechelen Oligoisoprens, hergestellt nach Herstellungsbeispiel 7 (Basen-Stickstoff 3,5%, $\overline{M}_n$ 760) wurden wie in Beispiel 9 beschrieben, mit 39 Tln. Maleinsäureanydrid umgesetzt. Die Säurezahl des Umsetzungsproduktes nach dem Eindampfen betrug 115 mg KOH/g. Nach der Neutralisation mit 62 Tln. 20 %iger Natronlauge, wie in Beispiel 9 beschrieben, erhielt man eine viskose, klare Lösung des Natriumsalzes mit einem Feststoffgehalt von 43%.

Beispiel 11

120 Tle. eines aminotelechelen Oligoisoprens, hergestellt nach Herstellungsbeispiel 8 (Basen-Stickstoff 1,55 %, $\bar{M}_n$ 1800) wurden, wie in Beispiel 9 beschreiben, in Toluol mit 14 Tln. Maleinsäureanhydrid umgesetzt. Die Säurezahl des Umsetzungsproduktes nach dem Eindampfen betrug 59,2 mg KOH/g. Nach der Neutralisation mit 28 Tln. 20%iger Natronlauge, wie in Beispiel 9 beschrieben, erhielt man eine viskose Lösung mit einem Feststoffgehalt von 42,5%, die in Wasser Emulsionen bildete.

Beispiel 12

120 Tle. eines aminotelechelen Oligobutadiens, hergestellt nach Herstellungsbeispiel 6 (Basen-Stickstoff 1,49%, $\bar{M}_n$ 1870) wurden wie in Beispiel 9 beschreiben, in Toluol mit 14 Tln. Maleinsäureanhydrid umgesetzt. Die Säurezahl des Umsetzungsproduktes nach dem Eindampfen betrug 59,7 mg KOH/g. Nach der Neutralisation mit 28 Tln. 20%iger Natronlauge, wie in Beispiel 9 beschrieben, wurde eine viskose Lösung mit einem Feststoffgehalt von 43,6% erhalten, die in Wasser Emulsionen bildete.

Beispiel 13

120 Tle. eines aminotelechelen Oligoisoprens hergestellt nach Herstellungsbeispiel 7 (Basen-N 3,5%, $\bar{M}_n$ 760) werden in 80 Tln. Toluol gelöst und bei 60 - 70° portionsweise mit 45,9 Tln. Phthalsäureanhydrid versetzt. Nach zweistündigem Rühren bei 60 - 70° wird im Vakuum bei 50 - 60° eingedampft. Die Säurezahl des Eindampfrückstandes beträgt 100,2 mg KOH/g. Das IR-Spektrum zeigt das Vorliegen einer Carbonamidgruppe.

Der Rückstand wird bei 50 - 60° mit 130 Tln. Wasser und 68 Tln. 20%iger Natronlauge versetzt und 1 Stunde gerührt. Man erhält eine hochviskose klare Lösung mit einem Trockengehalt von 47%, die in Wasser klare, stark schäumende Lösungen liefert.

Beispiel 14

120 Tle. eines aminotelechelen Oligobutadiens hergestellt nach Herstellungsbeispiel 6 (Basen-N 1,49 %, $\bar{M}_n$ 1870), werden wie in Beispiel 13 beschrieben, in 80 Tln. Toluol mit 19,2 Tln. Phthalsäureanhydrid umgesetzt. Der Eindampfrückstand besaß eine Säurezahl von 53,4 mg KOH/g. Er wurde mit 200 Tln. Wasser und 26,5 Tln. 20%iger Natronlauge bei 50 - 60° gelöst. Man erhielt eine weißliche Paste mit einem Trockengehalt von 38,5%, die in Wasser emulsionsartig löslich war.

Beispiel 15

120 Tle. eines aminotelechelen Oligobutadiens, hergestellt nach Herstellungsbeispiel 5 (Basen-Stickstoff 3,2%, $\bar{M}_n$ 740), wurden in 80 Tln. Tetrahydrofuran gelöst und bei 40 - 50° mit 46 Tln. Hexahydrophthalsäureanhydrid versetzt. Nach dreistündigem Rühre bei 60 - 70° wurde im Vakuum bei 60 - 70° vom Lösungsmittel befreit.

Die Säurezahl des Eindampfrückstandes betrug 108,5 mg KOH/g. Der Rückstand wurde mit 130 Tln. Wasser und 64 Tln. 20%iger Natronlauge versetzt und eine Stunde bei 50 - 60° gerührt. Man erhielt eine viskose, klare Lösung mit einem Trockengehalt von 47%.

Beispiele 16 - 22

Allgemeine Polymerisationsvorschrift

In einem 6 Liter Autoklav mit Blattrührer (150 UPM) und Außenmantelheizung mit geregelter Innentemperatur werden unter Ausschuß von Luftsauerstoff eingebracht:

| | |
|---|---|
| Entonisiertes Wasser | 1850 g |
| Polymeremulgator, 10%ige wässrige Lösung | 640 g |
| Tert.-Dodecylmercaptan | 5 g |
| 4,4'-Azo-bis-(4-Cyanopentansaures Kalium) | 5 g |
| gelöst in ention. Wasser | 80 g |
| Butadien | 1600 g |

Der Autoklaveninhalt wird auf eine Innentemperatur von 65 Grad C aufgeheizt und bei diese Temperatur konstant gehalten, bis der Druck von ca. 7 bar auf ca. 1,5 bar abgefallen ist. Der Autoklav wird oben langsam entspannt, das entweichende Butadien entsorgt, der Latex abgelassen und aschließend entmonomerisiert; indem man ca. 10% des im Latex enthaltenen Wassers abdestilliert und gleichzeitig durch frisches Wasser ergänzt.

| Beispiel Nr. | Emulgator von Beispiel Nr. | Feststoff [Gew.%] | Ausfall [g] | Teilchengrösse [a] [nm] | pH | Auslaufzeit [b] [sec] | Elektr. Leitfaden [ms] |
|---|---|---|---|---|---|---|---|
| 16 | 9 | 41 | 0 | 75 | 8,5 | 300cp[c] | 2,0 |
| 17 | 10 | 38,5 | 8 | 65 | 10,9 | 32,3 | 2,4 |
| 18 | 11 | 42 | 6 | 300 | 10,3 | 16,9 | 1,4 |
| 19 | 12 | 39 | 12 | 350 | 12,3 | 16,5 | 4,3 |
| 20 | 13 | 35 | 0 | 70 | 11,1 | 26,3 | 1,9 |
| 21 | 14 | 37 | 10 | 300 | 10 | 16 | – |
| 22 | 15 | 36 | 75 | 95 | 6,6 | 18,7 | 2,1 |

a) Durch Trübungsmessung ermittelt (entspricht $D_{AV}$ siehe DIN 53206)

b) Auslaufbecher nach DIN 53211, 4 mm Düse bei 25°C

c) Brookfield-Viskosimeter (Spindel 2; 6 U/min)

## Patentansprüche

1) Verwendung von Polycarbonsäuren und ihren Salzen der allgemeinen Formel

$$[X]\text{-}(NHOC\text{-}Y\text{-}COO\ M)_n (I),$$

in der

X für den Rest eines hydrophoben, gegebenenfalls verzweigten Vinyloligomers mit einem mittleren Molekulargewicht $\overline{M}_n$ von 200 - 5000,

Y für den 1,2-Vinylen-, 1,2-Ethylen-, 1,3-Propylen-, 1,2-Phenylen-, 1,2-Cyclohexen-4-ylen- oder 1,2-Cyclohexylen-Rest,

n für eine Zahl von 1,4 - 3,0,

M für Wasserstoff, ein Alkalimetall, eine Ammonium-, $C_1$-$C_4$-Alkylammonium- oder $C_2$-$C_3$-Hydroxyalkyl-ammonium-Gruppe stehen.

## Claims

The use pf polycarboxylic acids and salts thereof corresponding to the general formula

$$[X]\text{–}(NHOC\text{–}Y\text{–}COO\ M)_n \quad (I)$$

in which

X is the residue of a hydrophobic, optionally branched vinyl oligomer having an average molar weight $\overline{M}_n$ of 200 to 5000,

Y represents the 1,2-vinylene, 1,2-ethylene, 1,3-propylene, 1,2-phenylene, 1,2-cyclohexen-4-ylene or 1,2-cyclohexylene group,

n is a number of 1.4 to 3.0,

M is hydrogen, an alkyli metal, an ammonium, $C_{1-4}$ alkylammonium or $C_{2-3}$ hydroxyalkyl ammonium group, as surfactants and emulsifiers in aqueous systems.

## Revendications

1. Utilisation d'acides polycarboxyliques et de leurs sels, de formule générale:

$$[X]\text{–}(NHOC\text{–}Y\text{–}COO\ M)_n \quad (I),$$

dans laquelle

X représente le reste d'un oligomère vinylique hydrophobe, éventuellement ramifié, ayant un poids moléculaire moyen $\overline{M}_n$ de 200 à 5000,

Y représente le reste 1,2-vinylène, 1,2-éthylene, 1,3-propylène, 1,2-phénylène, 1,2-cyclohexène-4-ylène ou 1,2-cyclohexylène,
n est un nombre valant 1,4 à 3,0,
M représente un atome d'hydrogène, un atome de métal alcalin, un groupe ammonium, alkylammonium en $C_1$ à $C_4$ ou hydroxyalkylammonium en $C_2$ ou $C_3$,
comme tensioactifs et émulsifiants dans des systèmes aqueux.